Europäisches Patentamt

European Patent Office

Office européen des brevets

(11) Veröffentlichungsnummer: **0 144 786**

**A1**

(12) **EUROPÄISCHE PATENTANMELDUNG**

(21) Anmeldenummer: 84113470.3

(22) Anmeldetag: 08.11.84

(51) Int. Cl.⁴: **B 23 D 47/00**

(30) Priorität: 14.11.83 DE 3341424

(43) Veröffentlichungstag der Anmeldung:
19.06.85 Patentblatt 85/25

(84) Benannte Vertragsstaaten:
DE FR GB IT

(71) Anmelder: TREMAG Trennmaschinen-Gesellschaft mbH
Am Alten Schacht 8
D-4100 Duisburg 17(DE)

(72) Erfinder: Ehm, Karl Horst, Dipl.-Ing.
Am Alten Schacht 8
D-4100 Duisburg 17(DE)

(72) Erfinder: Orendi, Roderich Rolf, Ing. (grad.)
Heltorfer Mark 15
D-4000 Düsseldorf(DE)

(74) Vertreter: Bonsmann, Manfred, Dipl.-Ing.
Kaldenkirchener Strasse 35a
D-4050 Mönchengladbach 1(DE)

(54) Trennvorrichtung.

(57) Eine Trennvorrichtung, insbesondere eine Kreissäge zur Metallbearbeitung, weist ein an einer axial verschiebbaren Welle angebrachtes Sägeblatt auf. Die Welle ist sowohl radial als auch axial hydrostatisch gelagert. Wegen der axialen Verschiebbarkeit erfolgt die axiale hydrostatische Lagerung an einer Stirnseite mittels eines Ringkolbens. Dieser Ringkolben liegt mit einem radialen Endbereich gegen eine in den Ringzylinder vorspringende Schulter des Lagergehäuses an und ist von solcher Querschnittsform und Elastizität, daß er in Arbeitslage elastisch verschwenkt bzw. verkantet und dadurch das Spiel soweit herabgesetzt wird, daß der Kolben in radialer Richtung Lagerkräfte aufnehmen kann und sich außerdem Kolbendichtungen erübrigen.

FIG. 4

Trennvorrichtung

Die Erfindung betrifft eine Trennvorrichtung, insbesondere eine Kreissäge zur Metallbearbeitung, mit einer axial relativ zu einem Lagergehäuse verschiebbaren Welle des Trennwerkzeuges zum Zwecke des Erreichens eines Trennwerkzeugrückhubes nach dem Trennvorgang ohne Berührung des Trenngutes, und mit einer sowohl radial als auch axial wirksamen hydrostatischen Wellenlagerung, mit einem mit dem Lagergehäuse drehfest verbundenen Lagerflansch, der innenseitig und an seiner einen Stirnseite Lagertaschen mit Kapillarzuführungen aufweist, und mit einem in einem Ringzylinder zwischen einem sich an die andere Stirnseite anschließenden Abschnitt des Lagerflansches mit geringerem Außendurchmesser und dem Lagergehäuse axial verschiebbar angeordneten Ringkolben, der an seiner einem drehfest mit der Welle verbundenen Lagerring zugewandten Stirnseite Lagertaschen mit Kapillarzuführungen aufweist und der in Arbeitsstellung der Trennvorrichtung durch auf die gegenüberliegende Stirnseite aufgebrachten hydraulischen Druck gegen den Lagerring anliegt.

Bei derartigen, vornehmlich in dem Arbeitsfluß von Produktionsanlagen, wie Walzenstraßen, als integrierter Bestandteil eingesetzten Trennvorrichtungen besteht meist die Aufgabe, lange, einzelne oder mehrere nebeneinander liegende Materialstränge des Walzgutes durch Trennschnitte aufzuteilen und/oder die nicht verwendbaren Enden der Rohlinge abzuschneiden ("schopfen"). Die Materialstränge liegen dabei meist auf Transportmitteln, wie Rollgängen. Die Material-

0144786

stränge werden durch geeignete Mittel so positioniert, daß die vorgesehene Trennstelle mit dem Trennwerkzeug fluchtet. Danach wird das Material eingespannt, und dann erfolgt der eigentliche Trennvorgang. Nach dem Trennvorgang, insbesondere beim Einsatz von mit Hartstoff bestückten Trennwerkzeugen, muß zwischen dem Trenngut und dem Trennwerkzeug vor dem Rückhub des Trennwerkzeuges ein Abstand geschaffen werden, um zu verhindern, daß während des Leerhubes des Trennwerkzeuges einklemmende Späne od. dgl. das Trennwerkzeug beschädigen oder unerwünschte Riefen auf den Trennstellen verursachen.

Ein sauberer Schnitt erfordert während des Trennvorganges eine möglichst ruhige Lagerung des Trennwerkzeuges und damit eine stabile Lagerausbildung. Darüber hinaus besteht die Forderung, daß nach dem Trennvorgang für den Rückhub bzw. Leerhub der Trennvorrichtung diese und das Trenngut voneinander entfernt werden können, ohne daß dabei die für eine gute Schnittqualität erforderliche beiderseitige Materialspannung gelöst wird. Hierzu ist es bekannt, nach dem Trennvorgang bzw. nach Beendigung des Schnitthubes zunächst die der Lagerung des Trennwerkzeuges abgewandte Spannvorrichtung von dem Trennwerkzeug um einen bestimmten Betrag wegzubewegen, und dann die in einem Lagergehäuse verschiebbar gelagerte Welle des Trennwerkzeuges nach dem Trennvorgang etwa um die Hälfte des genannten Betrages in die gleiche Richtung zu verschieben. Dann kann der Rückhub des Trennwerkzeuges ohne Berührung der Schnittflächen des Trenngutes erfolgen.

Für die Lagerung der somit axial verschiebbar angeordneten Welle des Trennwerkzeuges ist neben der Verwendung von Wälzlagern der Einsatz hydrostatischer Lager bekannt geworden, und zwar speziell eine Vorrichtung der eingangs genannten Art. Die radiale hydrostatische Wellenlagerung bereitet hier grundsätzlich keine Probleme. Die axiale hydrostatische Wellenlagerung erfolgt dadurch, daß ein mit dem Lagergehäuse drehfest verbundener Lagerflansch - der innenseitig die für die radiale Lagerung vorgesehenen hydrostatischen Lagerta-

schen aufweist - an seiner einen Stirnseite Lagertaschen mit Kapillarzuführungen für die axiale Lagerung der Welle aufweist. Da die Welle zur Ermöglichung des Trennwerkzeugrückhubes axial verschiebbar angeordnet sein muß, ist es nicht möglich, die axiale Lagerung in der anderen Richtung durch Lagertaschen an der anderen Stirnseite des Lagerflansches zu bewirken. Statt dessen erfolgt die Lagerung an einem Ringkolben, welcher Lagertaschen mit Kapillarzuführungen aufweist, und der in einem Ringzylinder angeordnet ist. Der Ringzylinder befindet sich zwischen einem Abschnitt des Lagerflansches mit geringerem Außendurchmesser und dem Lagergehäuse. Während des Trennvorganges wird der Ringkolben mit Druck in dem Ringzylinder beaufschlagt, und zwar von der Seite her, die der Lagertaschen aufweisenden Stirnseite des Ringkolbens gegenüberliegt. Für die axiale Verschiebung der Welle des Trennwerkzeuges wird der Druck in dem Ringzylinder abgesenkt und dann die Welle mittels einer gesonderten Vorrichtung axial verschoben. Für einen neuen Trennvorgang wird der Ringkolben durch Druckbeaufschlagung des Ringzylinders wieder in die Arbeitsstellung gebracht, in der eine axiale hydrostatische Lagerung der Welle auf zwei gegenüberliegenden Seiten vorhanden ist.

Der Ringkolben der bekannten Anordnung hat somit die Aufgabe, in Arbeitsstellung der Trennvorrichtung eine axiale hydrostatische Wellenlagerung zu bewirken bzw. zu ermöglichen. Hierzu wird der Ringkolben mit einem so großen Spiel eingepaßt, daß er nicht klemmen kann. Das Spiel wird durch Dichtringe abgedichtet. Von Nachteil ist hierbei, daß der drehfest mit dem Lagergehäuse verbundene Lagerflansch in dem Bereich des Ringzylinders bzw. Ringkolbens keine radialen Lagerkräfte aufnehmen kann. Somit muß der drehfest mit dem Lagergehäuse verbundene Lagerflansch nach dem Stand der Technik, der innenseitig und an seiner einen Stirnseite zur radialen bzw. axialen hydrostatischen Lagerung ausgebildet ist, so dimensioniert sein, daß er zur Aufnahme aller in diesem Bereich auftretenden radialen Lagerkräfte geeignet ist. Dies führt zu einer großvolumigen Lagerausbildung, was

insbesondere aus Platzgründen nachteilig ist.

Der Erfindung liegt die Aufgabe zugrunde, die Trennvorrichtung der eingangs genannten Art so zu verbessern, daß der Ringkolben in der Arbeitsstellung der Trennvorrichtung auch in radialer Richtung Tragwirkung ausübt, womit dann letztlich eine kleinere Dimensionierung des Lagers als bei dem Stande der Technik erforderlich erreicht werden kann.

Diese Aufgabe wird erfindungsgemäß dadurch gelöst, daß der Ringkolben mit geringem Spiel in dem Ringzylinder geführt ist, und der Ringkolben in Arbeitsstellung der Trennvorrichtung mit einem radialen Endbereich seiner dem Lagerring zugewandten Stirnseite gegen eine in den Ringzylinder vorspringende Schulter des Lagergehäuses anliegt und von solcher Querschnittsform und Elastizität ist, daß der Ringkolben in Arbeitsstellung infolge der Wirkung des aufgebrachten hydraulischen Druckes um die Schulter elastisch verschwenkt bzw. verkantet und dadurch das Spiel in dem Ringzylinder so herabgesetzt wird, daß der Ringkolben in radialer Richtung Lagerkräfte aufzunehmen in der Lage ist, und die der die Lagertaschen mit Kapillarzuführungen aufweisenden Stirnseite des Ringkolbens zugewandte Stirnseite des Lagerringes derart konisch ausgebildet ist, daß in Arbeitsstellung des Ringkolbens die zugeordneten Lagerbereiche einen gleichmäßigen Abstand aufweisen.

Durch den für die Erreichung der axialen hydrostatischen Lagerung in der Arbeitsstellung erforderlichen hydraulischen Druck in dem Ringkanal bzw. Ringzylinder wird der ohnehin mit geringem Spiel in dem Ringzylinder geführte Ringkolben um die Schulter des Lagergehäuses elastisch verschwenkt bzw. verkantet. Dadurch wird das Spiel in dem Ringzylinder so herabgesetzt, daß durch den Ringkolben praktisch eine starre Verbindung zwischen dem Lagergehäuse und dem Abschnitt des Lagerflansches mit geringerem Aussendurchmesser erreicht wird. Dies wiederum hat zur Folge, daß derjenige Bereich des Lagerflansches mit geringerem Außendurchmesser, der von dem Ringkolben überdeckt wird, Lagerkräfte in radialer Richtung aufnehmen kann. Da somit der an den Ringzylinder angrenzende Teil des Lagerflansches durch den Ringkolben praktisch starr in radialer Richtung (in Arbeitsstellung) abgestützt wird, kann der Lagerflansch bei einer Trennvorrichtung gemäß der Erfindung wesentlich kleiner dimensioniert werden, und zwar umsomehr, als kein zusätzlicher Platz für Kolbendichtungen benötigt wird, da der Ringspalt durch die Verschraubung geschlossen wird und gegen Öldurchfluß dichtet. Was im einzelnen unter "geringem Spiel" zu verstehen ist, richtet sich nach den jeweiligen Dimensionen und Materialien. Als Größenordnung kan angegeben werden, daß das Spiel bei einem Durchmesser des Ringkolbens in der Größenordnung von 500 mm bei einseitiger Anlage auf der der anliegenden Seite gegenüberliegenden Seite in der Größenordnung von 0,04 bis 0,07 mm liegt.

Obwohl die Querschnittsform des Ringkolbens bei der Vorrichtung gemäß der Erfindung stark variieren kann, hat sich herausgestellt, daß eine besonders zweckmässige Querschnittsform des Ringkolbens dann vorliegt, wenn diese etwa quadratisch ist.

Nach einem weiteren Merkmal der Erfindung kann vorgesehen sein, daß die zu den Lagertaschen in dem Lagerflansch und in dem Ringkolben führenden Kapillaren gemeinsam in den Ringkanal münden, von dem aus zur Erreichung der Arbeitsstellung der hydraulische Druck auf den Ringkolben aufgebracht wird.

Die Erfindung wird nachfolgend anhand des in den Zeichnungen schematisch dargestellten Ausführungsbeispiels weiter erläutert. Es zeigen:

0144786

Fig. 1 einen Schnitt durch eine als Kreissäge ausgebildete Trennvorrichtung gemäß der Erfindung
in Arbeitsstellung;

Fig. 2 eine Darstellung entsprechend Fig. 1 bei Beginn des Leerhubes des Sägeblattes, wobei
das Trenngut und die Sägewelle die vorgesehenen axialen Bewegungen bereits ausgeführt
haben;

Fig. 3 eine Detaildarstellung des Bereiches Ringkolben-Lagerring in Arbeitsstellung;

Fig. 4 eine Darstellung entsprechend Fig. 3 entsprechend der Verhältnisse gemäß Fig. 2.

Die in den Zeichnungen dargestellte Kreissäge zur Metallbearbeitung weist ein Sägeblatt 1 auf, welches in
einem Lagergehäuse 2 in Pfeilrichtung A axial verschiebbar an einer Welle 3 angebracht ist, und zwar
zwischen einem mit der Welle 3 verschraubten Flansch
4 und einem mit dem Flansch 4 verschraubten Flansch 5.
Die Welle 3 ist sowohl in radialer Richtung als auch
in axialer Richtung in hydrostatischen Lagern gelagert, und zwar in einem Bereich mit kleinem Durchmesser in einer fest mit dem Gehäuse 2 verbundenen Buchse 6, welche über Zuführungskanäle 8 mit hydrostatischem Druck beaufschlagte Lagertaschen 7 aufweist sowie in einem Bereich größeren Durchmessers in einem
drehfest mit dem Lagergehäuse 2 verbundenen Lagerflansch 9, welcher Lagertaschen 10 aufweist, denen
mit Druck beaufschlagte hydrostatisches Medium über
Zuführungskanäle 11 zugeführt wird. Der Lagerflansch
9 ist an seiner dem Sägeblatt 1 zugewandten Stirnseite mit einem Dichtflansch 12 verschraubt, der eine gegen den Flansch 4 anliegende Dichtung 13 aufweist. Der
Lagerflansch 9 weist außerdem an seiner dem Sägeblatt 1 zugewandten Stirnseite Lagertaschen 14 mit Kapillarzuführungen 15 auf. An der gegenüberliegenden Seite weist der Lagerflansch 9 einen Bereich mit geringerem Außendurchmesser auf. In dem dadurch gebildeten Ringspalt 16 ist ein Ringkolben 17 axial, also in Pfeilrichtung A, verschiebbar angeordnet. Der Ringkolben 17 weist an seiner dem Sägeblatt 1 abgewandten Seite Lagertaschen 18 mit Kapillarzuführungen 19 auf. Gegenüberliegend zu den Lagertaschen 18 ist ein Lagerring 20 angeordnet, welcher drehfest mit der Welle 3 verbunden ist. Der Lagerring 20 wird von der Welle 3 durch eine Mitnehmerverbindung (z.B. Paßfeder) mitgenommen und stützt sich axial an der Stirnfläche eines auf die Welle 3 geschnittenen Ritzels 21 ab. Der Lagerring 20 ist mit einer Ölablaufbohrung 22 versehen.

Die axiale hydrostatische Lagerung der Welle 3 und da- mit des daran angebrachten Sägeblattes 1 erfolgt dadurch, daß einerseits die den Lagertaschen 14 des Lagerflansches 9 zugewandte Stirnseite des Flansches 4 hydrostatisch abgestützt wird, und andererseits der als Ringkolben wirkende Ringkanal 16 so beaufschlagt wird, daß die den Lagertaschen 18 des Ringkolbens 17 zugewandte Seite des Lagerringes 11 in bekannter Weise hydrostatisch abgestützt wird.

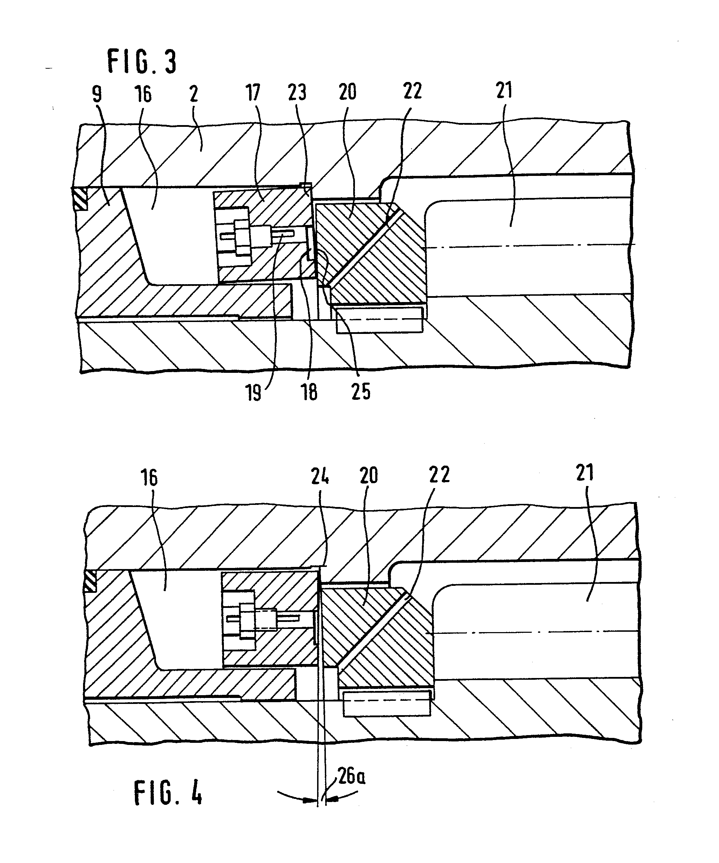

Der Ringkolben 17 ist in dem Ringzylinder 16 mit geringem Spiel geführt und liegt in Arbeitsstellung der Trennvorrichtung mit seinem radialen Endbereich 23 (Fig. 3) gegen eine in den Ringzylinder 16 vorspringende Schulter 24 des Lagergehäuses 2 an. Die dem Ringkolben zugewandte Stirnseite 25 des Lagerringes 20 ist um den Winkel 26a (Fig. 4) konisch ausgebildet, derart, daß sich der Abstand zwischen der Seite 25 und der gegenüberliegenden Seite des Ringkolbens 17 in radialer Richtung nach innen - von der Schulter 24 aus gesehen - vergrößert. Der Ringkolben 17 ist von solcher Querschnittsform und Elastizität, daß dieser sich bei Druckbeaufschlagung des Ringzylinders 16 aus der in Fig. 4 dargestellten Ruhelage in die in Fig. 3 dargestellte Arbeitsstellung infolge der Wirkung des in dem Ringzylinder 16 aufgebrachten hydraulischen Druckes um die Schulter 24 derart elastisch verschwenkt bzw. verkantet, daß zum einen die einander zugewandten Lagerbereiche des Ringkolbens 17 und des Lagerringes 20 einen gleichmäßigen Abstand aufweisen (Fig. 3) und zum anderen das zwischen dem Ringkolben 17 und dem Ringzylinder 16 in der nicht beaufschlagten Lage (Fig. 4) vorhandene Spiel so herabgesetzt wird, daß der Kolben gerade an die Wandung zur Anlage kommt. Dies hat zur Folge, daß der an den Ringzylinder 16 angrenzende Teil des Lagerflansches durch Wirkung des Ringkolbens in radialer Richtung praktisch starr abgestützt wird. Da dies in Arbeitsstellung so ist, kann dementsprechend der Lagerflansch wesentlich kleiner als bei Vorrichtungen nach dem Stande der Technik dimensioniert werden. Darüber hinaus erübrigt es sich, Kolbendichtungen für den Ringkolben vorzusehen, die bei Vorrichtungen nach dem Stande der Technik unbedingt erforderlich sind, da der Ringspalt in Arbeitsstellung durch die Verschwenkung geschlossen wird und gegen einen Öldurchfluß abdichtet.

Die zu den Lagertaschen in dem Lagerflansch und in dem Ringkolben führenden Kapillaren können in weiterer Ausgestaltung der Erfindung gemeinsam in den Ringkanal 16 münden, von dem aus zur Erreichung der Arbeitsstellung der hydraulische Druck auf den Ringkolben 17 aufgebracht wird.

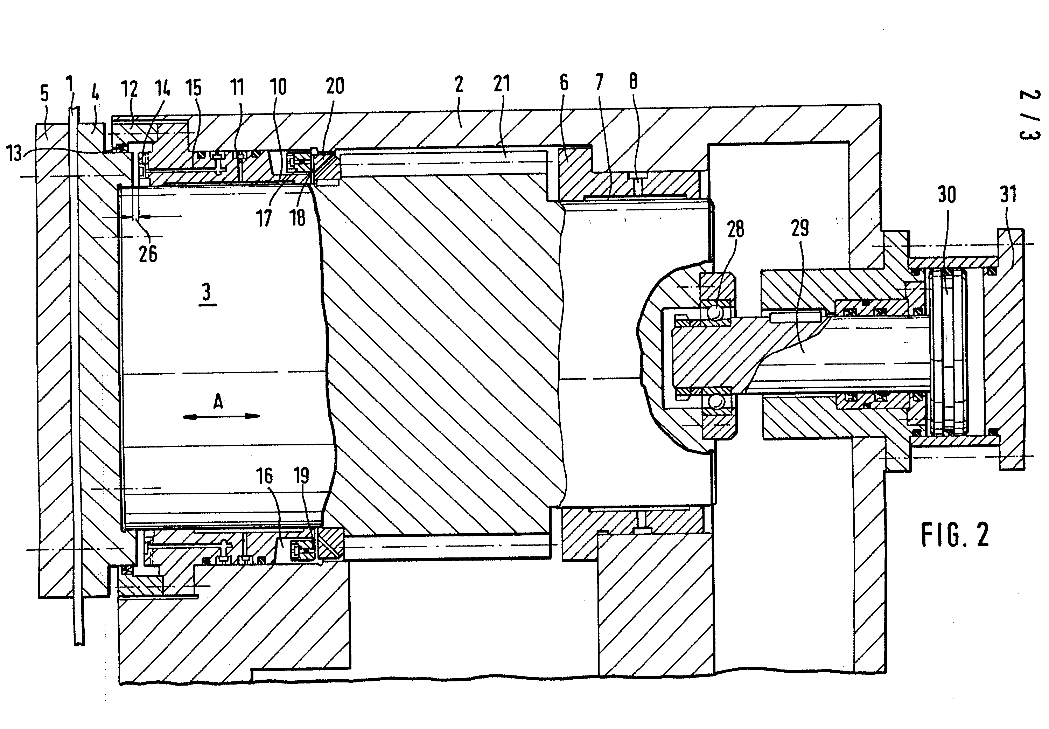

Bei der in Fig. 2 gezeigten Stellung des Sägeblattes 1 - der Arbeitsstellung - ist somit die Sägewelle 3 in radialer Richtung bei 26 und 27 hydrostatisch in axialer Richtung "eingespannt".

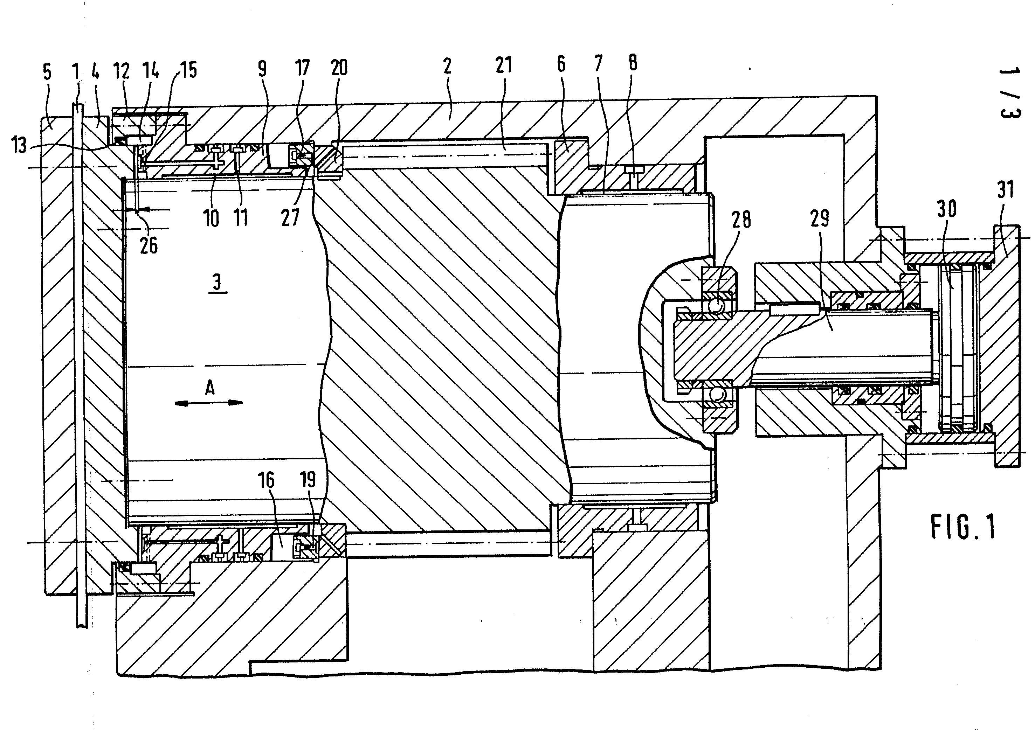

In der Stellung gemäß Fig. 1 ist der Trennschnitt erfolgt. Der der Sägewelle 3 abgewandte Teil des (nicht dargestellten) Trenngutes ist entsprechend der zeichnerischen Darstellung nach links vom Sägeblatt 1 um einen Betrag x entfernt worden. Anschließend wird dann das Sägeblatt 1 um den Betrag $\frac{x}{2}$ in der gleichen Richtung bewegt. So kann ein von jeder Berührung des Trenngutes freier Rückhub des Sägeblattes erfolgen. Dies wird ermöglicht durch Wirkung einer über eine Lagerung 28 an der Welle 3 angreifende Kolbenstange 29 eines Kolbens 30, der sich drehgesichert in einem Zylinder 31 frei bewegen kann. Durch Beaufschlagen der Kreisfläche des Kolbens 30 mit hydraulischem Druck bei teilweiser Entlastung des Ringkolbens 17 wurde in der in Fig. 1 gezeigten Stellung die Welle 3 unter weitgehend beibehaltenen radialen hydrostatischen Lagerbedingungen um den genannten Betrag $\frac{x}{2}$ im Bild nach links bewegt, so daß nunmehr ein Spalt 26 strichgebildet ist.

Nach beenden des Rückhubes des Sägeblattes 1 wird dann die axiale Arbeitsstellung der Welle 3 wieder hergestellt, und zwar durch Absenken des Druckes auf die Kreisfläche des Kolbens 30 und Steigern des Druckes in dem Ringzylinder 16 auf den Ringkolben 17, und zwar solange, bis die Welle wiederum auf gegenüberliegenden Stirnseiten hydrostatisch "eingespannt" ist.

Patentansprüche

1. Trennvorrichtung, insbesondere Kreissäge zur Metallbearbeitung, mit einer axial relativ zu einem Lagergehäuse (2) verschiebbaren Welle (3) des Trennwerkzeuges (1) zum Zwecke des Erreichens eines Trennwerkzeugrückhubes nach dem Trennvorgang ohne Berührung des Trenngutes, und mit einer sowohl radial als auch axial wirksamen hydrostatischen Wellenlagerung, mit einem mit dem Lagergehäuse (2) drehfest verbundenen Lagerflansch (9) der innenseitig und an seiner einen Stirnseite Lagertaschen (10, 14) mit Kapillarzuführungen (11, 15) aufweist, und mit einem in einem Ringzylinder (16) zwischen einem sich an die andere Stirnseite anschließenden Abschnitt des Lagerflansches mit geringerem Außendurchmesser und dem Lagergehäuse axial verschiebbar angeordneten Ringkolben (17), der an seiner einem drehfest mit der Welle verbundenen Lagerring (20) zugewandten Stirnseite Lagertaschen (18) mit Kapillarzuführungen (17) aufweist und der in Arbeitsstellung der Trennvorrichtung durch auf die gegenüberliegende Stirnseite aufgebrachten hydraulischen Druck gegen den Lagerring anliegt, dadurch gekennzeichnet, daß der Ringkolben (17) mit geringem Spiel in dem Ringzylinder (16) geführt ist, und der Ringkolben in Arbeitsstellung der Trennvorrichtung mit einem radialen Endbereich seiner dem Lagerring zugewandten Stirnseite gegen eine in den Ringzylinder (16) vorspringende Schulter (24) des Lagergehäuses (2) anliegt und von solcher Querschnittsform und Elastizität ist, daß der Ringkolben in Arbeitsstellung infolge der Wirkung des aufgebrachten hydraulischen Druckes um die Schulter (24) elastisch verschwenkt bzw. verkantet wird und dadurch das Spiel zwischen Ringkolben (17) und Ringzylinder (16) so herabgesetzt wird, daß der Ringkolben in radialer Richtung Lagerkräfte aufzunehmen in der Lage ist, und die der die Lagertaschen (18) mit Kapillarzuführungen aufweisenden Stirnseite des Ringkolbens (17) zugewandte Stirnseite (25) des Lagerringes (20) derart konisch ausgebildet ist, daß in Arbeitsstellung des Ringkolbens (17) die zugeordneten Lagerbereiche einen gleichmäßigen Abstand aufweisen.

2. Trennvorrichtung nach Anspruch 1, dadurch gekennzeichnet, daß die Querschnittsform des Ringkolbens (17) etwa quadratisch ist.

3. Trennvorrichtung nach Anspruch 1 oder 2, dadurch gekennzeichnet, daß die zu den Lagertaschen (10, 14, 18) in dem Lagerflansch (9) und in dem Ringkolben (17) führenden Kapillaren gemeinsam in den Ringkanal münden, von dem aus zur Erreichung der Arbeitsstellung der hydraulische Druck auf den Ringkolben (17) aufgebracht wird.

FIG.1

0144786

FIG. 2

FIG. 3

9   16   2   17   23   20   22   21

19   18   25

16   24   20   22   21

26a

FIG. 4

Europäisches
Patentamt

**EUROPÄISCHER RECHERCHENBERICHT**

## EINSCHLÄGIGE DOKUMENTE

EP 84113470.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE – A1 – 2 642 584 (FORKARDT) <br> * Gesamt * <br> -- | 1-3 | B 23 D 47/00 |
| A | DE – B2 – 2 503 858 (PRECISION IN-DUSTRIELLE) <br> * Fig. * <br> -- | 1 | |
| A | DE – A – 2 058 259 (MOLINS) <br> * Fig. 1 * <br> -- | 1,3 | |
| A | DE – A – 1 652 661 (BABCOCK) <br> * Gesamt * <br> -- | 1,3 | |
| A | CH – A5 – 638 419 (GLEITLAGER-TECHNIK) <br> * Fig. 1,2 * <br> ---- | 1 | |

| RECHERCHIERTE SACHGEBIETE (Int. Cl.4) |
|---|
| B 23 D 45/00 |
| B 23 D 47/00 |
| B 23 D 59/00 |
| B 23 D 61/00 |
| B 23 Q  1/00 |
| B 24 B 19/00 |
| B 24 B 27/00 |
| B 21 B 47/00 |

Der vorliegende Recherchenbericht wurde für alle Patentansprüche erstellt.

| Recherchenort | Abschlußdatum der Recherche | Prüfer |
|---|---|---|
| WIEN | 15-02-1985 | FUCHS |